# EUROPEAN PATENT APPLICATION

(11) **EP 1 856 983 A1**
(43) Date of publication of application: **21.11.2007**
(21) Application number: 06010175.5
(22) Date of filing: 17.05.2006
(51) Int. Cl.: A23G 3/02, A23G 3/28

(54) **Mould for sweets with an imprint**

(71) Applicant: CFS Weert B.V., 6006 RV Weert (NL)
(72) Inventor: Reijnen, René Sophia Jozef, 6114 BR Susteren (NL)
(74) Representative: Schwöbel, Karl T.

(57) **Abstract**

The present invention relates to a machine for the production of sweets that are moulded into a certain form and furnished with an imprint whereas it comprises a mould with an exchangeable embossed stamp on which the negative of the imprint is provided.

## Description

The present invention relates to a machine for the production of sweets that are moulded into a certain form and furnished with an imprint, whereas it comprises a mould with an exchangeable embossed stamp, on which the negative for the imprint is provided.

Sweets, preferably lollipops, are merchandised nowadays in a special form and additionally with a certain imprint. Often, the lot size of these sweets is rather small, so that the price per sweet is relatively high.

It was therefore the objective of the present invention, to provide a machine for the production of sweets that allows to reduce the production costs for sweets with a low lot size.

The problem is solved with a machine for the production of sweets that are moulded into a certain form and furnished with an imprint, whereas it comprises a mould with an exchangeable embossed stamp on which the negative of the imprint is provided.

It was totally surprising for a person skilled in the art and could not have been expected, that with the inventive machine, the production cost per sweet, preferably lollipop, which comprise an imprint, can be reduced significantly, especially for small lot sizes. The embossed stamp are interchanged easily, which saves setting-up time. The inventive machine is manufactured and operated easily.

Sweets are produced for example by cutting a certain amount of sweet's material from a string and forming it into a desired form, for example a disk, a square, a ball or an oval. According to the present invention, the sweets comprise additionally to the certain form also an imprint which can be a certain character, an alphabetic character, and/or a word. This imprint is imprinted into the sweet's material while it is formed; i.e. before the sugar in the sweet, especially lollipop is hardened.

According to the present invention, the machine for the production of sweets therefore comprises a mould which has essentially the form into which the sweets are moulded. Furthermore, the inventive machine comprises an exchangeable embossed stamp which comprises the negative of the imprint. Since this embossed stamp is exchangeable, the inventive machine can be re-tooled easily and cost-efficiently after a certain lot of sweets has been produced.

Preferably, the embossed stamp is inserted into the mould. Furthermore, it is desirable that the embossed stamp can be reversibly fastened at the mould, so that the embossed stamp is interchangeable. Therefore, even more preferably, the embossed stamp comprises a groove into which a screw or the like is inserted to fasten the embossed stamp to the mould. The person skilled in the art understands, that other fastening means are also feasible.

The embossed stamp can be made out of any material known to the person skilled in the art that can be exposed to food. However, in a preferred embodiment of the present invention, the embossed stamp is made out of a plastic material, because this plastic material can be processed easily and is able to withstand the elevated temperatures of the sweet's material during its froming. Furthermore, the plastic material is more resistant against abrasion than other materials.

Preferably, the mould itself is made of metal, especially a metal that can be brought into contact with food.

Preferably, the mould itself is reversibly fixable to a holder. This preferred embodiment of the present invention has the advantage that the entire mould itself is also easily exchangeable so that the machine can be re-tooled even more easily after a certain lot has been produced.

Conventionally a pair of moulds, an upper-mould and a lower-mould, cooperate to form a sweet. The moulds can moved from an opened- into a closed-position. One or both moulds can be furnished with an embossed stamp. Furthermore, the machine comprises a plurality of pairs of moulds, which are arranged for example on a drum or on an endless chain and rotate, respectively.

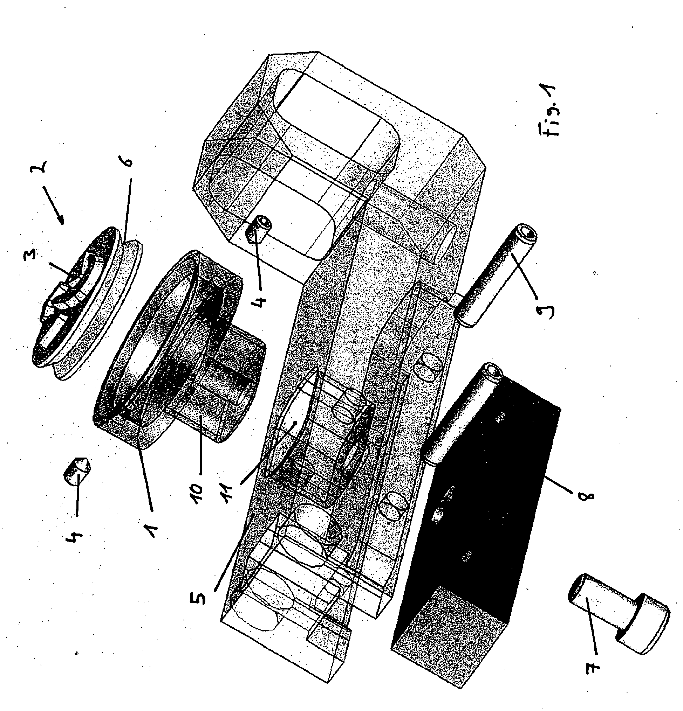

The invention is now explained in further details according to figure 1. However, these explanations do not limit the scope of protection of the present invention.

Figure 1 shows a holder 5 which is attached via bolts 9 to a block 8 which is part of a chain or a drum and which moves during production. Additionally, the holder 5 comprises a recess 11 into which the foot 10 of the mould 1 can be inserted. The indentation 11 and the foot 10 are designed such, that mould 1 is non-rotatable. Furthermore, the indentation 11 comprises holes which allow a fixation of foot 10, for example via headless screws (not depicted).

Into the mould 1, a embossed stamp 2 can be inserted which comprises on its surface the negative of an imprint, which is pressed into the sweet's material. The embossed stamp 2 further comprises at its circumference a groove 6 which facilitates the fixation of the embossed stamp 2 in the mould 1 via headless screws 4.

After the embossed stamp has been inserted, the sweets can be produced by inserting sweet's material into the embossed stamp and compressing it with an additional mould (not depicted), which will be arranged on top of the depicted mould
1. The two moulds will be brought together and separated again after the sweet has the desired shape and to remove the sweet.

### Reference list

- 1: mould
- 2: embossed stamp
- 3: negative imprint
- 4: headless screw
- 5: holder
- 6: groove
- 7: screw
- 8: block
- 9: bold
- 10: foot
- 11: indentation

## Claims

1. Machine for the production of sweets that are moulded into a certain form and furnished with an imprint, **characterized in, that** it comprises a mould (1) with an exchangeable embossed stamp (2) on which the negative (3) of the imprint is provided.

2. Machine according to claim 1, **characterized in that** embossed stamp (2) is inserted into the mould (1).

3. Machine according to claim 1 or 2, **characterized in, that** the embossed stamp (2) is interchangeably fastened at the mould (1)

4. Machine according to claim 3, **characterized in that** the embossed stamp (2) comprises a groove (6) into which a screw (4) is inserted to fasten the embossed stamp (2) to the mould (1).

5. Machine according to one of the preceding claims, **characterized in, that** the embossed stamp (2) is made of plastic material.

6. Machine according to one of the preceding claims, **characterized in, that** the mould is made of metal.

7. Machine according to one of the preceding claims, **characterized in, that** the mould is reversibly fixable to a holder (5).

8. Machine according to one of the preceding claims, **characterized in, that** it comprises a pair of moulds, which can be moved from an opened- into a closed position.

9. Machine according to claim 8, **characterized in that** it comprises a plurality of pairs of moulds, which are arranged on a drum or an endless chain.
